# EUROPÄISCHE PATENTSCHRIFT

(11) **EP 3 542 376 B1**
(45) Veröffentlichungstag und Bekanntmachung des Hinweises auf die Patenterteilung: **18.08.2021**
(21) Anmeldenummer: 17803871.7
(22) Anmeldetag: 15.11.2017
(51) Int. Cl.: H01B 13/012, H02G 3/04, B29C 64/118, B29C 70/72, B33Y 10/00, B33Y 80/00

(54) **VERFAHREN UND VORRICHTUNG ZUR HERSTELLUNG EINER UMMANTELUNG FÜR ELEKTRISCHE KABEL**
METHOD AND APPARATUS FOR MANUFACTURING A SLEEVE FOR ELECTRIC CABLES
PROCÉDÉ ET DISPOSITIF DE FABRICATION D'UNE GAINE POUR CÂBLES ÉLECTRIQUES

(30) Priorität: 18.11.2016 DE 102016122267
(43) Veröffentlichungstag der Anmeldung: 25.09.2019
(73) Patentinhaber: Certoplast Technische Klebebänder GmbH, 42285 Wuppertal (DE)
(72) Erfinder: RAMBUSCH, René, 42113 Wuppertal (DE); LEERMANN, Timo, 42369 Wuppertal (DE); GHARIBE, Samer, 42285 Wuppertal (DE)
(74) Vertreter: Andrejewski - Honke Patent- und Rechtsanwälte Partnerschaft mbB
(86) Internationale Anmeldenummer: PCT/EP2017/079353
(87) Internationale Veröffentlichungsnummer: WO 2018/091547

(56) Entgegenhaltungen:
- WO-A1-2016/167770
- WO-A1-2017/072263
- DE-A1-102016 002 977
- US-A1- 2015 329 069
- US-A1- 2016 164 238

## Beschreibung

Die Erfindung betrifft ein Verfahren zur Herstellung einer Ummantelung für elektrische Kabel, wonach die Ummantelung ganz oder teilweise mittels eines generativen Fertigungsverfahrens durch den Aufbau einer vorgegebenen Schichtenfolge produziert wird, und wonach die Ummantelung zur Bündelung von Kabeln in Automobilen zu einem Kabelstrang als flexible Schlauchummantelung die Kabel ganz oder teilweise umhüllt.

Bei einem Verfahren, wie es im Großen und Ganzen durch die WO 2014/089596 A1 bekannt geworden, wird ganz generell eine aus Kunststoff hergestellte Führung oder Führungseinrichtung für elektrische Kabel beschrieben. Die Führungseinrichtung fungiert dabei mehr oder minder als feste oder starre Ummantelung für die fraglichen Kabel, wie dies beispielsweise dort in der Fig. 11 dargestellt wird. Am Rande erwähnt die WO 2014/089596 A1 im dortigen Anspruch 21 dann noch die Möglichkeit, die Führungseinrichtung aus Kunststoff mithilfe eines sogenannten 3D-Druckes, also im Zuge eines generativen Fertigungsverfahrens, herstellen zu können.

Ein vergleichbarer Stand der Technik lässt sich der US 2015/0129726 A1 entnehmen. Auch in diesem Fall geht es um Führungseinrichtungen für elektrische Kabel aus einem starren Werkstoff. Sofern an dieser Stelle Kunststoff eingesetzt wird, können die bekannten Führungseinrichtungen ausweislich der Erläuterungen im dortigen Abschnitt [0019] auch mithilfe eines 3D-Druckprozesses hergestellt werden.

Die bekannten Vorgehensweisen propagieren generell starre Führungseinrichtungen für elektrische Kabel, mit deren Hilfe die Kabel üblicherweise vor mechanischen Einflüssen, Witterung etc. geschützt werden. Meistens werden neben den elektrischen Kabeln auch noch andere Versorgungsleitungen durch die bekannten Führungseinrichtungen gleichsam eingehaust.

Ganz unabhängig hiervon dient die Ummantelung von elektrischen Kabeln in Automobilen ganz anderen Zwecken. Tatsächlich sorgt die fragliche Ummantelung in diesem Zusammenhang primär dafür, dass die fraglichen Kabel zu einem Kabelbündel oder Kabelstrang zusammengefasst werden. Außerdem sorgt die Ummantelung für einen mechanischen Schutz der einzelnen Kabel bzw. des Kabelstranges oder Kabelbündels. Durch den spezifischen Einsatzzweck muss die Ummantelung zunächst einmal flexibel sein, um beispielsweise einer gebogenen Verlegung eines solchermaßen hergestellten Kabelstranges im Innern des Automobiles folgen zu können. Hinzu kommt, dass insbesondere bei einer Verlegung des fraglichen Kabelstranges im Motorraum spezifische Anforderungen hinsichtlich der dortigen Temperaturen und auch im Hinblick auf etwaige Beständigkeit gegenüber Medien erfüllt werden müssen.

Eine Ummantelung zur Bündelung von Kabeln in Automobilen wird beispielsweise in der DE 10 2008 021 841 A1 beschrieben. An dieser Stelle wird für die Ummantelung ein Klebeband eingesetzt, welches mit einem Träger aus einem Folienkörper ausgerüstet ist. Der Folienkörper verfügt über eine Basisfolie aus Polyethylen. Außerdem kann die fragliche Folie durch Elektronenstrahlung oder auch anderweitig vernetzt werden. Die Basisfolie als solche wird durch Blasextrusion hergestellt. Das hat sich grundsätzlich bewährt.

Beim gattungsbildenden Stand der Technik nach der DE 10 2014 216 761 A1 wird so vorgegangen, dass eine Anzahl von einzelnen und zu einem Leitungsbündel zusammengefassten Leitungen mit einem Bündelungselement versehen wird. Bei dem Bündelungselement handelt es sich um eine textilartige Faserverflechtung, die durch Aufbringen einer Fasern und Bindemittel umfassenden Suspension auf das Leitungsbündel hergestellt wird. Dabei kann grundsätzlich auch mit einem generativen Fertigungsverfahren durch den Aufbau einer vorgegebenen Schichtenfolge gearbeitet werden, weil die Suspension mehrmals im Wechsel mit Trocknungsphasen oder Nachbehandlungen aufgebracht werden kann.

Die Handhabung von Folien und insbesondere Wickelfolien aus einem weichen Polyolefin zur Herstellung des Klebebandes oder auch zur unmittelbaren Ummantelung der Kabel zur Realisierung von Kabelbäumen in Fahrzeugen bzw. Kraftfahrzeugen oder Automobilen durch Umwickeln ist nicht frei von Nachteilen. Denn solche Wickelfolien lassen sich aufgrund ihrer Oberflächenklebrigkeit relativ schwer abwickeln und mit einer Klebstoffbeschichtung ausrüsten. Auch die anschließende Verarbeitung entsprechend aufgebauter Klebebänder ist teilweise schwierig.

Denn die fraglichen Klebebänder werden typischerweise spiral- oder wendelförmig um die einzelnen Kabel zur Realisierung des jeweiligen Kabelbündels und im Endeffekt zur Herstellung der gewünschten Kabelbäume in Kraftfahrzeugen herumgewickelt. Ähnliche Probleme ergeben sich für den Fall, dass eine Schlauchummantelung durch einen gebildeten Umschlag eines in Axialrichtung verlaufenden Schlauchstückes als Ummantelung eingesetzt wird. Hinzukommt als weiterer und gravierender Nachteil, dass die sämtlichen Arten der Umwicklung der einzelnen Kabel zur Herstellung von Kabelbäumen in Kraftfahrzeugen bzw. Automobilen manuell umgesetzt werden. Das lässt sich im Kern darauf zurückführen, dass praktisch jeder Kabelbaum ein Unikat darstellt und sich die Herstellung bisher nicht maschinengestützt umsetzen lässt.

Der nächstliegende Stand der Technik nach der US 2016/164238 A1 befasst sich mit einem System und einem Verfahren zum automatisierten Spleißen und Abschließen von Elektrokabeln. Dabei wird mit einem generativen Fertigungsverfahren gearbeitet, indem beispielsweise durch einen Druckvorgang ein Kabel mit einem Kragen ausgerüstet wird. Das führt insgesamt zu einem relativ starren Aufbau.

Schließlich ist die Lehre nach der DE 10 2014 216 761 A1 mit dem grundsätzlichen Nachteil verbunden, dass der herstellungstechnische Aufwand bei der Realisierung einer Schichtenfolge durch die jeweils zwischengeschalteten Trocknungsschritte relativ groß ist. Außerdem ist die textilartige Faserverflechtung insgesamt inhomogen aufgebaut, weil sie sich letztlich aus Fasern und Bindemittel zusammensetzt. Bei den Fasern handelt es sich um eine Vielzahl ungeordneter einzelner Fasern, deren Zusammenhalt durch den Binder zur Verfügung gestellt wird. Daraus resultiert je nach Ausprägung und Länge der einzelnen Fasern eine verringerte Flexibilität eines solchermaßen hergestellten Leitungsbündels. Außerdem ist es schwierig, solche Leitungsbündel beispielsweise farbig auszulegen.

Der Erfindung liegt das technische Problem zugrunde, ein derartiges Verfahren zur Herstellung einer Ummantelung für elektrische Kabel so weiter zu entwickeln, dass einerseits die Verarbeitung von Kabeln in Automobilen gelingt und andererseits die Herstellung vereinfacht ist.

Zur Lösung dieser technischen Problemstellung ist ein gattungsgemäßes Verfahren nach Anspruch 1 und eine zugehörige Vorrichtung gemäß Anspruch 6 vorgesehen.

Die Schlauchummantelung für die Kabel ist folglich zunächst einmal flexibel ausgelegt, im Unterschied zum Stand der Technik mit den starren Führungseinrichtungen. Außerdem sorgt die Schlauchummantelung für eine ganz oder teilweise Umhüllung der Kabel. D.h., die Kabel werden in ihrer Längserstreckung entweder mit einem durchgängigen Schlauch ganz umhüllt oder teilweise mit jeweils Schlauchsegmenten. In jedem Fall ist die Schlauchummantelung flexibel ausgelegt, so dass der auf diese Weise hergestellte Kabelstrang problemlos dreidimensional verlegt und insbesondere gebogen werden kann, um in Automobilen verlegt werden zu können.

Dabei kann die Schlauchummantelung unmittelbar an die Kabel angeformt werden. Alternativ hierzu kann die Schlauchummantelung aber auch mit Abstand die fraglichen Kabel umhüllen. In letztgenanntem Fall ist der Abstand zwischen der flexiblen Schlauchummantelung und dem umhüllten Kabel jedoch gering, weil üblicherweise im Querschnitt eine Flächenbelegung durch die Kabel im Innern der flexiblen Schlauchummantelung von wenigstens 70%, in der Regel 80% und mehr beobachtet wird.

Im Rahmen der Erfindung wird also die flexible Schlauchummantelung zur Bündelung von Kabeln in Automobilen zu einem Kabelbündel und zur Herstellung eines entsprechend konfektionierten Kabelbaums in einer ersten Alternative direkt an die Kabel angeformt, und zwar mithilfe eines generativen Fertigungsverfahrens. Bei der zweiten Alternative werden die Kabel mit geringfügigem Abstand umhüllt, wobei die Schlauchummantelung erneut mithilfe des generativen Fertigungsverfahrens hergestellt wird. Das kann grundsätzlich maschinell und mannlos erfolgen, so dass einerseits mit deutlich verringerten Kosten im Vergleich zum Stand der Technik zu rechnen ist und andererseits die bei der Herstellung von Kabelbäumen erforderliche Flexibilität zumindest erhalten bleibt, wenn sie nicht sogar noch gesteigert werden kann.

Hierbei geht die Erfindung zunächst einmal von der Erkenntnis aus, dass das eingesetzte generative Fertigungsverfahren zur Herstellung der flexiblen Schlauchummantelung und der Umhüllung der Kabel zur Realisierung des gewünschten Kabelbündels und im Endeffekt zur Produktion des Kabelbaums für Automobile so arbeitet, dass aus einem formlosen oder formneutralen Material mittels chemischer und/oder physikalischer Prozesse eine gewünschte Schichtenfolge der flexiblen Schlauchummantelung produziert wird. Diese Schichtenfolge wird im Allgemeinen und unmittelbar direkt auf Basis von dreidimensionalen Werten für die räumliche Position der jeweiligen Schicht umgesetzt, die dazu meistens von einem Rechner oder einer Steuereinheit vorgegeben werden.

Das heißt, das generative Fertigungsverfahren baut die flexible Schlauchummantelung Schicht für Schicht auf. Jede Schicht korrespondiert dabei zu einer dreidimensionalen Raumkurve, deren Ausdehnung und Lage im Raum von einem Rechner bzw. der Steuereinheit vorgegeben wird. Nach dem Aufbau der betreffenden Schicht wird diese im Allgemeinen gehärtet. Hierzu stehen bekanntlich chemische und/oder physikalische Prozesse zur Verfügung. Im Gegensatz zu beispielsweise durch Blasformen hergestellten Folien ist hierzu ein Werkzeug nicht erforderlich.

Außerdem kann die jeweilige Schicht bzw. die Schichtenfolge flexibel vom Rechner bzw. der Steuereinheit vorgegeben werden, so dass die Schlauchummantelung im Endeffekt jede denkbare Geometrie einnimmt oder einnehmen kann. Beispielsweise lassen sich auf diese Weise unschwer auch von vorneherein gekrümmte Schlauchummantelungen ebenso wie gerade oder auch abgewinkelte Schlauchummantelungen realisieren, ohne dass hierfür spezielle Werkzeuge erforderlich wären.

Wie bereits erläutert, wird die Schlauchummantelung erfindungsgemäß aus einem formlosen oder formneutralen Material hergestellt. Hierbei kann es sich grundsätzlich um ein Pulver handeln. Typischerweise wird jedoch eine Flüssigkeit eingesetzt. Tatsächlich empfiehlt die Erfindung den Rückgriff auf eine formlose Flüssigkeit, bei welcher es sich erfindungsgemäß und vorteilhaft um einen flüssigen Kunststoff handelt. Als flüssiger Kunststoff hat sich insbesondere ein solcher als günstig erwiesen, welcher in erhitztem Zustand flüssig ist und zusätzlich zum Aushärten vernetzt werden kann. Beispielsweise sind Fotopolymere und hier insbesondere Acrylatverbindungen besonders geeignet. Solche Fotopolymere können in erhitztem Zustand durch Extrusion oder Auftrag mit einer Düse verarbeitet werden.

Tatsächlich werden die fraglichen Kunststoffe bzw. Fotopolymere im Rahmen der Erfindung mithilfe einer Düse oder anderweitig erhitzt und können die Düse in geschmolzener Form für den Aufbau der gewünschten Schicht verlassen. Die solchermaßen hergestellte Schicht bzw. der Kunststoff lässt sich anschließend noch vernetzen. Das kann beispielsweise chemisch durch aufgebrachte Vernetzungsmittel oder auch physikalisch mithilfe von Elektronenstrahlen oder auch UV-Strahlen erfolgen. Nachdem der fragliche Kunststoff ausgehärtet ist, steht unmittelbar die fragliche Schicht als Bestandteil der auf diese Weise realisierten flexiblen Schlauchummantelung zur Verfügung.

Im Regelfall wird hier weiter so vorgegangen, dass das fragliche Material mit einer unterhalb der Schmelztemperatur einer Kabelisolierung angesiedelten Verarbeitungstemperatur die Kabel umhüllt und anschließend verfestigt wird. Das heißt, bei der Verarbeitung des fraglichen formlosen Materials bzw. des flüssigen Kunststoffs speziell des Fotopolymers im Beispielfall wird die Auslegung vorteilhaft so getroffen, dass der fragliche Kunststoff beispielsweise mit einer Temperatur von 100 °C, 150 °C, 200 °C oder auch 250 °C oder noch mehr aufgebracht wird. Das hängt einerseits von der Schmelztemperatur der Kabelisolierung ab, die bis zu 250 °C betragen kann. Andererseits natürlich auch davon, nach welcher Alternative gearbeitet wird.

Für den Fall, dass die Schlauchummantelung direkt und schichtweise auf den Kabelstrang aufgebracht wird, d.h., die Schlauchummantelung an die Kabel angeformt wird, muss die Temperatur des flüssigen Kunststoffes beim Auftrag unterhalb der Schmelztemperatur der Kabelisolierung angesiedelt sein. Es kann jedoch auch so gearbeitet werden, dass die flexible Schlauchummantelung die Kabel mit Abstand umhüllt. Typische Schmelztemperaturen von Kabelisolierungen aus beispielsweise betragen bis zu 200 °C. Es können aber auch Kabelisolierungen aus beispielsweise ETFE (Ethylen-Tetrafluorethylen-Copolymer) oder auch solche aus PTFE (Polytetrafluorethylen) eingesetzt werden, die mit Schmelztemperaturen bis maximal 250 °C ausgerüstet sind.

Um dennoch die auf diese Weise insgesamt hergestellte flexible Schlauchummantelung mit der nötigen mechanischen Stabilität auszurüsten, wird anschließend der fragliche Kunststoff vernetzt. Auf diese Weise steigt sogleich auch der Schmelzpunkt der hierdurch realisierten flexiblen Schlauchummantelung. - Grundsätzlich kann zur Herstellung der einzelnen Schichten auch auf ein formneutrales Material als Ausgangsprodukt zurückgegriffen werden. In diesem Fall liegt das Material band- und/oder drahtförmig vor.

Um nun die einzelnen Kabel zu bündeln und mit der flexiblen Schlauchummantelung auszurüsten, sind verschiedene grundsätzliche Vorgehensweisen denkbar. Diese zeichnen sich gemeinsam dadurch aus, dass die flexible Schlauchummantelung vorteilhaft durch die realisierte Schichtenfolge der einzelnen zunächst flüssigen und dann aushärtenden Kunststoffschichten aufgebaut sind. Dabei kann nach einer ersten Variante die Schlauchummantelung direkt und schichtweise auf die Kabel aufgebracht werden, um auf diese Weise den gewünschten Kabelstrang zu realisieren. Bei dieser Vorgehensweise ist es grundsätzlich möglich, die einzelnen zu bündelnden Kabel bzw. den Kabelstrang zunächst mit einer Haftbeschichtung auszurüsten, um anschließend auf den Kabelstrang die Schlauchummantelung schichtweise aufzubringen.

Im Regelfall ist eine solche Haftbeschichtung entbehrlich. Denn zwischen dem Kunststoff der Kabelisolierung, meistens PVC, und dem Kunststoff für die flexible Schlauchummantelung, regelmäßig ein Fotopolymer, kommt es auch ohne Haftvermittler zur Adhäsion und folglich dazu, dass die flexible Schlauchummantelung die Kabel wunschgemäß zum Kabelbündel zusammenfasst und zugleich für den Schutz der Kabel beim Einbau des solchermaßen realisierten Kabelbaumes im Automobil sorgt.

Der direkte Auftrag der Schlauchummantelung schichtweise auf den Kabelstrang kann im Detail weiter so vorgenommen werden, dass die Schlauchummantelung der Längserstreckung des Kabelstranges folgend auf diesen aufgebracht wird. In diesem Fall wird beispielsweise die Düse mit dem hieraus abgegebenen flüssigen Kunststoff entlang der Längserstreckung des Kabelstranges geführt. Das kann in zwei Richtungen erfolgen oder gleichzeitig mithilfe von zwei sich gegenüberliegenden Düsen, so dass auf diese Weise die gewünschte Schlauchummantelung aus gleichsam zwei Mantelhälften in einem Zug auf den Kabelstrang aufgebracht und folglich die flexible Schlauchummantelung hierdurch an die Kabel angeformt wird.

Im Rahmen einer alternativen Vorgehensweise kann die Schlauchummantelung aber auch winkelig zur Längserstreckung des Kabelstranges um den Kabelstrang herumgeführt werden. In diesem Fall mag die Schlauchummantelung beispielsweise spiralförmig oder wendeiförmig um den Kabelstrang herumgeführt werden, so dass die einzelnen Schichten der Schichtenfolge bei der Realisierung der Schlauchummantelung gleichsam mit Überlapp aneinander anschließen und sich überdecken. Demgegenüber sind die Schichten bei der zuerst beschriebenen Vorgehensweise und der hierbei realisierten Schichtenfolge übereinander bzw. der Längserstreckung der Kabel folgend angeordnet.

In diesen sämtlichen Fällen wird die Schlauchummantelung erfindungsgemäß auf der Basis aufgebaut. Das gilt auch dann, wenn die Schlauchummantelung (zusätzlich) an die Kabel angeformt wird. Die Basis lässt sich dabei im Regelfall nach Herstellung der Schlauchummantelung entfernen. Zu diesem Zweck kann die Basis aus beispielsweise zwei Hälften oder Halbschalen zusammengesetzt sein, die gelenkig miteinander verbunden sind und um den zu ummantelnden Kabelstrang zum Aufbau der Schichtenfolge herumgelegt werden.

Nach Herstellung der Schlauchummantelung lässt sich die solchermaßen aufgebaute Basis aus den beiden gelenkig miteinander verbundenen Halbschalen respektive Halbkreisen problemlos vom Kabelstrang entfernen. Grundsätzlich kann die Basis natürlich auch anderweitig im Detail realisiert werden. Entscheidend ist, dass die Basis um den Kabelstrang mehr oder minder bündig herumgelegt werden kann und zugleich zerlegbar aufgebaut ist. Außerdem lässt sich die Basis nach Herstellen der Schlauchummantelung entfernen.

Eine zusätzliche und optionale Beschichtung der Basis an ihrer der aufzubauenden Schichtenfolge zugewandten Oberseite oder Oberfläche sorgt dafür, dass die zerlegbare Basis nach der Herstellung der flexiblen Schlauchummantelung unschwer von dieser und auch von dem Kabelstrang wieder entfernt werden kann. Bei der Beschichtung kann es sich um ein Trennmittel oder auch ein Antihaftmittel handeln.

Von der Basis ausgehend wird die Schlauchummantelung als Umhüllung des Kabelstranges Schicht für Schicht aufgebaut. Dabei wird der Kabelstrang durch eine Öffnung der Basis hindurchgeführt und dadurch die auf der Basis aufgebaute Schichtenfolge zur Umhüllung des Kabelstranges aufgebaut. Hierbei befinden sich in der Regel der Kabelstrang und die Basis in Ruhe. Generell ist aber auch eine Bewegung relativ zueinander möglich.

Bei dieser Vorgehensweise ist die Basis hinsichtlich ihrer Flächenerstreckung überwiegend senkrecht im Vergleich zum linienförmigen Kabelstrang bzw. den einzelnen zu umhüllenden Kabeln orientiert. Die Schichtenfolge bzw. die Schlauchummantelung wird nun größtenteils senkrecht auf der Basis aufgebaut, wobei der Kabelstrang durch die Öffnung hindurch reicht. Dadurch kann die flexible Schlauchummantelung unmittelbar zur Umhüllung des Kabelstranges an der gewünschten Stelle aufgebaut werden. Etwaige Abzweigungen oder zusätzliche Befestigungsmittel wie Klebebänder, Schellen etc. mögen ergänzend dafür sorgen, dass die solchermaßen realisierte flexible Schlauchummantelung in Axialrichtung auf dem Kabelstrang gesichert wird.

Im Ergebnis wird ein Verfahren zur Herstellung einer Ummantelung für elektrische Kabel beschrieben und vorgestellt, welches sich aufgrund des eingesetzten generativen Fertigungsverfahrens insbesondere für die automatische Ummantelung zur Bündelung von Kabeln in Automobilen zu einem Kabelbündel besonders eignet und hierfür prädestiniert ist. Denn zu diesem Zweck umhüllt die flexible Schlauchummantelung die zusammenzufassenden Kabel ganz oder teilweise in ihrer Längsrichtung.

Gegenstand der Erfindung ist auch eine Vorrichtung, welche zur Herstellung einer Ummantelung für elektrische Kabel geeignet ist und dazu mit einem Manipulator und einer an den Manipulator angeschlossenen Düse zur Ausgabe von insbesondere formlosem flüssigen Material im Zuge eines generativen Fertigungsverfahrens ausgerüstet ist. Die Vorrichtung ist nun erfindungsgemäß dadurch gekennzeichnet, dass der Manipulator die Düse zur Realisierung einer flexiblen Schlauchummantelung und Bündelung von Kabeln in Automobilen zu einem Kabelstrang zum Umhüllen der Kabel mithilfe der Schlauchummantelung beaufschlagt.

Bei dem Manipulator handelt es sich vorteilhaft um einen Roboter oder Roboterarm. Der Manipulator bzw. Roboter wird entsprechend den Vorgaben einer Steuereinheit bzw. eines Computers angesteuert, um über die an den Manipulator angeschlossene Düse das formlose flüssige Material zur Realisierung der Schichtenfolge auszugeben. Dazu wird der Manipulator bzw. der Roboter mit entsprechenden Raumkoordinaten für die jeweilige Schicht gespeist. Der Manipulator kann die jeweilige Schicht in diesem Zusammenhang in einem Zug durch eine beispielsweise kreisförmige Bewegung herstellen. Es ist selbstverständlich auch möglich, die Schicht nicht in einer durchgängigen kreisförmigen Bewegung, sondern durch eine bogenförmige Hin- und Herbewegung aufzubauen.

Das alles gelingt auf einfache Art und Weise, und zwar unter Berücksichtigung einer im Vergleich zum Stand der Technik deutlich vereinfachten Fertigung und insbesondere unter Verzicht auf manuelle Verarbeitungsschritte. Hierin sind die wesentlichen Vorteile zu sehen.

Im Folgenden wird die Erfindung anhand einer lediglich ein Ausführungsbeispiel darstellenden Zeichnung näher erläutert; es zeigen:
- Fig. 1: eine Vorrichtung zur Herstellung einer Ummantelung für elektrische Kabel respektive zur Bündelung von Kabeln in Automobilen zu einem Kabelbündel,
- Fig. 2: das auf diese Weise hergestellte Kabelbündel in einer Seitenansicht, teilweise im Schnitt,
- Fig. 3: das Kabelbündel als Bestandteil eines auf einem Formbrett konfektionierten Kabelbaumes und
- Fig. 4: die Basis für den Aufbau der flexiblen Schlauchummantelung im Detail.

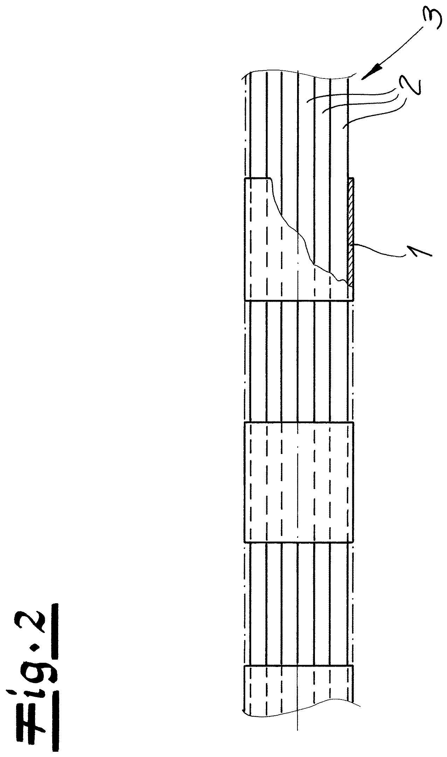

In den Figuren ist eine Vorrichtung zur Herstellung einer Ummantelung 1 für elektrische Kabel 2 dargestellt. Die Ummantelung 1 kann die fraglichen Kabel 2 über ihre gesamte axiale Länge gesehen durchweg umhüllen. Das ist strichpunktiert in der Fig. 2 angedeutet. Daneben liegen aber auch Ausführungsbeispiele im Rahmen der Erfindung, bei welchen die Ummantelung nur sektionsweise für eine Umhüllung der Kabel 2 sorgt. Hierzu korrespondiert die durchgezogene Darstellung in der Fig. 2. Bei den Kabeln 2 handelt es sich im Ausführungsbeispiel um elektrische Kabel als Bestandteile eines auf diese Weise realisierten Kabelstranges 3. Der Kabelstrang 3 inklusive Ummantelung 1 ist als Bestandteil eines Kabelbaumes 12 zur elektrischen Verkabelung innerhalb eines Automobils ausgelegt.

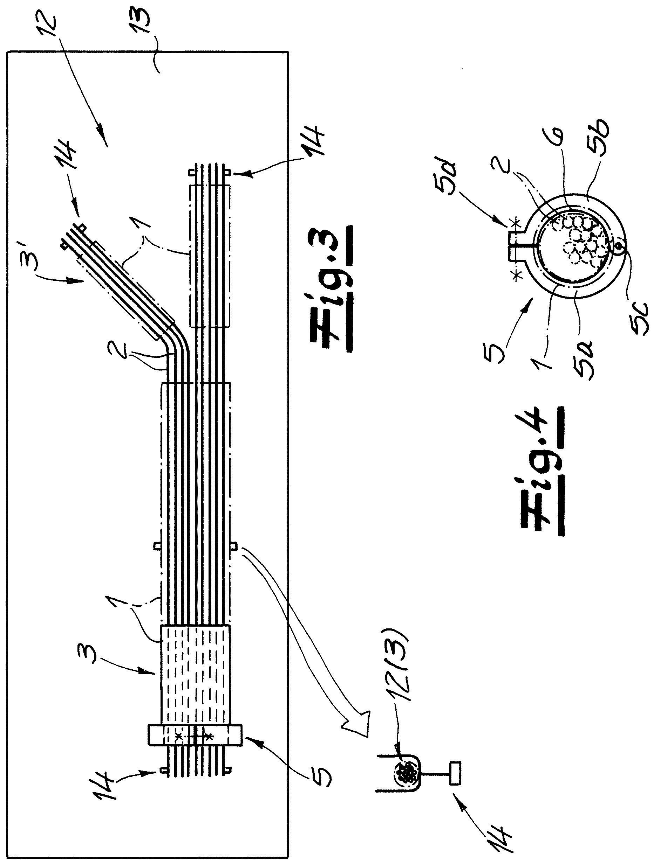

Der Kabelbaum 12 ist im Detail in der Fig. 3 dargestellt. Zur Konfektionierung des Kabelbaumes 12 und auch zur Anbringung der jeweiligen Ummantelung 1 der einzelnen Kabel 2 wird der fragliche Kabelbaum 12 im Ausführungsbeispiel auf einem sogenannten Formbrett 13 aufgenommen und gehalten. Solche Formbretter 13 sind generell im Stand der Technik bekannt, wozu auf die DE 10 2011 084 786 B4 verwiesen sei. Zur Halterung des Kabelbaumes 12 auf dem Formbrett 13 können einzelne Halterungen 14 respektive Abstandhalter 14 vorgesehen sein.

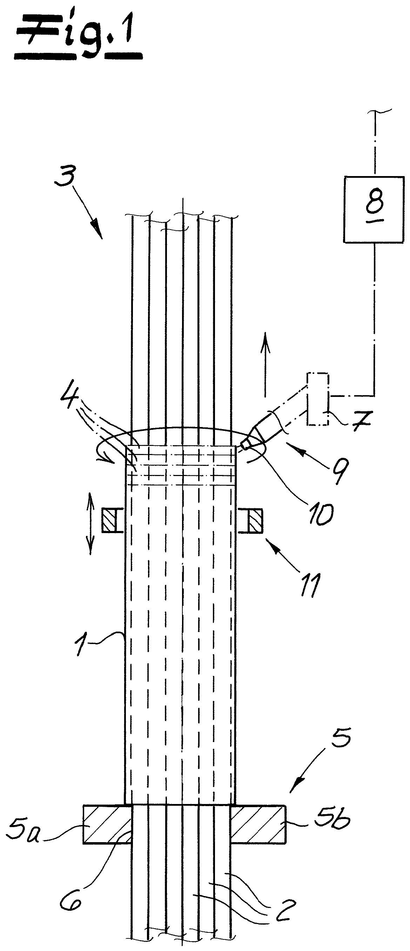

Die Ummantelung 1 wird nun erfindungsgemäß ganz oder teilweise mit Hilfe eines generativen Fertigungsverfahrens durch den Aufbau einer vorgegebenen Schichtenfolge produziert, wie dies im Detail in der Fig. 1 angedeutet ist. Tatsächlich erkennt man in der Fig. 1 eine als flexible Schlauchummantelung 1 im Detail ausgebildete Ummantelung 1, die die Kabel 2 ganz oder teilweise in ihrer Längsrichtung umhüllt. Mit Hilfe der flexiblen Schlauchummantelung 1 werden die Kabel 2 zu dem Kabelstrang 3 gebündelt. Aus den einzelnen Kabelsträngen 3 ist dann der Kabelbaum 12 zum Einbau in das nicht näher dargestellte Automobil aufgebaut.

Das im Rahmen der Erfindung realisierte generative Fertigungsverfahren zeichnet sich dadurch auf, dass die Ummantelung bzw. die flexible Schlauchummantelung 1 durch einzelne Schichten 4 realisiert wird, die im Ausführungsbeispiel nach der Fig. 1 Stoß an Stoß übereinander aufgebaut sind und aneinander anschließen, so dass auf diese Weise aus den einzelnen ringförmigen Schichten 4 insgesamt die mehr oder minder zylindrische flexible Schlauchummantelung 1 hergestellt wird. Die Schichten 4 bilden folglich die Schichtenfolge, welche mithilfe des generativen Fertigungsverfahrens an die Kabel 2 angeformt wird.

Man erkennt, dass die flexible Schlauchummantelung 1 die Kabel 2 im Rahmen der Darstellung nach der Fig. 1 bzw. den auf diese Weise zusammengefassten Kabelstrang 3 mit geringem Abstand umhüllt. Das heißt, die flexible Schlauchummantelung 1 liegt außen mit Abstand am Kabelstrang 3 an und sorgt auch für eine gegenseitige Fixierung der Kabel 2 zueinander, um diese zu dem Kabelstrang 3 zu bündeln. Die Schlauchummantelung 1 kann ihrerseits mithilfe beispielsweise eines Klebebandes oder anderer Befestigungsmittel am Kabelstrang 3 in axialer Richtung gesichert werden. Grundsätzlich sorgen auch beispielsweise eine Abzweigung 3' des Kabelstranges 3 entsprechend der Darstellung in der Fig. 3 oder andere Elemente für eine axiale Sicherung der flexiblen Schlauchummantelung 1.

Die Schlauchummantelung 1 kann direkt und schichtweise auf den Kabelstrang 3 aufgebracht werden, was jedoch nicht dargestellt ist. Tatsächlich können hierbei die einzelnen Schichten 4 der flexiblen Schlauchummantelung 1 winklig zur Längserstreckung des Kabelstranges 3 spiralförmig um den Kabelstrang 3 herumgeführt werden. In diesem Fall definieren die einzelnen Schichten 4 wiederum einen größtenteils zylindrischen Körper, allerdings derart, dass die einzelnen Schichten 4 wendeiförmig um den Kabelstrang 3 herumgeführt sind und sich hierbei zumindest teilweise überlappen. Das ist insgesamt nicht dargestellt.

Im Rahmen des Ausführungsbeispiels sind die Schichten 4 und die daraus realisierte Schichtenfolge so aufgebaut, dass die einzelnen Schichten 4 Stoß auf Stoß gleichsam übereinander gestapelt werden und dadurch die insgesamt zylindrische flexible Schlauchummantelung 1 formen und definieren. Dazu wird die fragliche Schlauchummantelung 1 auf einer Basis 5 aufgebaut. Das gilt grundsätzlich auch für den Fall, dass die einzelnen Schichten 4 der flexiblen Schlauchummantelung 1 nach dem Aufbau auf der Basis 5 wendeiförmig um den Kabelstrang 3 herumgeführt sind und sich hierbei zumindest teilweise überlappen. Ebenso dann, wenn die einzelnen Schichten 4 an den Kabelstrang 3 angeformt werden. So oder so ist die Basis 5 im Ausführungsbeispiel scheibenartig mit zentraler Öffnung 6 für den hierdurch geführten Kabelstrang 3 ausgelegt. Vorliegend sind die Basis 5 und der Kabelstrang 3 ortsfest ausgelegt. Grundsätzlich kann die Basis 5 aber auch rotieren. Ebenso ist eine Relativbewegung zwischen der Basis 5 und dem Kabelstrang 3 möglich.

Der Detailaufbau der Basis 5 erschließt sich anhand der Fig. 4. Hier erkennt man, dass die Basis 5 insgesamt mehrteilig und zerlegbar aufgebaut ist. Im Ausführungsbeispiel und nicht einschränkend setzt sich die Basis 5 aus zwei Halbschalen bzw. zwei Halbkreisen 5a, 5b zusammen, die über ein Drehgelenk 15 miteinander gekoppelt sind. Ein zusätzlicher Verschluss 5d sorgt dafür, dass die beiden um den Kabelstrang 3 bzw. die einzelnen Kabel 2 herumgelegten Halbschalen 5a, 5b in eingebautem Zustand zueinander gesichert sind. Mithilfe der solchermaßen aufgebauten zerlegbaren Basis 5 kann der Kabelstrang 3 von der Basis 5 umschlossen werden, und zwar auch in auf dem Formbrett 13 fixierten Zustand entsprechend der Darstellung in der Fig. 3.

Dazu ist es lediglich erforderlich, das Formbrett 13 entsprechend im Vergleich zu einer nachfolgend noch näher zu beschreibenden Düsen 10 bzw. einem Manipulator 9 auszurichten. Tatsächlich wird man meistens so vorgehen, dass das Formbrett 13 oder allgemein eine Halterung 13 für den Kabelbaum 12 einerseits und die Düse 10 andererseits unabhängig voneinander jeweils räumlich bewegt werden können. Grundsätzlich kann aber auch so gearbeitet werden, dass entweder nur das Formbrett bzw. die Halterung 13 oder nur die Düse 10 räumlich bewegbar ausgelegt sind.

Im Ausführungsbeispiel sind die Basis 5 und der Kabelstrang 3 jeweils ortsfest. Der Kabelstrang 3 mit seinen zu bündelnden Kabeln 2 wird durch die Öffnung 6 in der Basis 5 hindurchgeführt. In der Darstellung nach der Fig. 1 erkennt man einen Antrieb 7, welcher den bereits angesprochenen Manipulator 9 beaufschlagt. Dazu ist eine Steuereinheit 8 vorgesehen, welche den Antrieb 7 respektive den Manipulator 9 beaufschlagt. Mithilfe des Antriebes 7 kann der Manipulator 9 in der in Fig. 1 angedeuteten Axialrichtung bewegt werden, so dass die dort auf der Basis 5 aufgebaute Schichtenfolge nachvollziehbar ist. Zusätzlich sorgt der Manipulator 9 dafür, dass die angeschlossene Düse 10 die in der Fig. 1 angedeuteten Kreisbewegungen bzw. Bogenbewegungen zur Realisierung der Schichtenfolge vollführt. Bei dem Manipulator 9 mag es sich um einen Roboter oder Roboterarm handeln, welcher insgesamt dreidimensionale Bewegungen vollführen kann.

Über die Düse 10 wird ein formloses flüssiges Material in Gestalt eines flüssigen Kunststoffes, beispielsweise eines Fotopolymers, abgegeben. Dabei wird zunächst eine erste Schicht 4 auf der Basis 5 dadurch aufgebaut, dass der Manipulator 9 gesteuert mithilfe der Steuereinheit 8 eine in der Fig. 1 dargestellte und lediglich angedeutete kreisförmige Bewegung um den durch die Öffnung 6 hindurchgeführten Kabelstrang 3 vollführt. Nachdem die erste Schicht 4 ausgehärtet ist, bringt der Manipulator 9 mit der Düse 10 auf die erste Schicht 4 eine weitere zweite Schichte 4 auf, so dass im Endeffekt die bereits beschriebene und die zylindrische flexible Schlauchummantelung 1 definierende Schichtenfolge auf der Basis 5 aufgebaut wird, indem die Schichtenfolge bzw. die Schlauchummantelung 1 die Öffnung 6 mit dem dadurch hindurchgeführten Kabelstrang 3 umringt.

Die Schlauchummantelung 1 wird folglich auf der Basis 5 aufgebaut. Vom der Basis 5 ausgehend umhüllt die Schlauchummantelung 1 den Kabelstrang 3. Die einzelnen Schichten 4 der Schichtenfolge und folglich der flexiblen Schlauchummantelung 1 werden mit einer Aufbaugeschwindigkeit auf der Basis 5 produziert. Um das an dieser Stelle eingesetzte und über die Düse 10 in flüssiger Form abgegebene Fotopolymer auszuhärten, ist eine Behandlungseinheit 11 vorgesehen. Die Behandlungseinheit 11 lässt sich im Ausführungsbeispiel wenigstens axial entlang des Kabelstranges 3 hin- und herbewegen, wie ein Doppelpfeil in der Fig. 1 andeutet. Auf diese Weise kann die Behandlungseinheit 11 jeweils für die physikalische Behandlung der Schichtenfolge respektive der jeweiligen Schicht 4 eingesetzt und genutzt werden.

Bei der Behandlungseinheit 11 handelt es sich um eine solche, die zur physikalischen Verfestigung der einzelnen Schichten 4 respektive der auf diese Weise gebildeten flexiblen Schlauchummantelung 1 eingesetzt wird. Grundsätzlich können die Schichten 4 aber auch chemisch verfestigt werden, was im Detail jedoch nicht dargestellt ist. Tatsächlich handelt es sich bei der Behandlungseinheit 11 im Ausführungsbeispiel um eine solche, die auf optischem Wege für eine Vernetzung des Kunststoffes, im Beispielfall Polyethylen, sorgt. Durch die Vernetzung der betreffenden Schicht 4 mithilfe der Behandlungseinheit 11 respektive des an dieser Stelle realisierten UV-Strahlers wird die Schicht 4 schrittweise gehärtet. Zum Abschluss kann dann die Basis 5 entfernt werden und ist die flexible Schlauchummantelung 1 an der gewünschten Stelle des Kabelstranges 3 vorhanden.

## Patentansprüche

1. Verfahren zur Herstellung einer Ummantelung (1) für elektrische Kabel (2), wonach die Ummantelung (1) ganz oder teilweise mittels eines generativen Fertigungsverfahrens durch den Aufbau einer vorgegebenen Schichtenfolge produziert wird, wonach ferner
die Ummantelung (1) zur Bündelung von Kabeln (2) in Automobilen zu einem Kabelstrang (3) als flexible Schlauchummantelung (1) die Kabel (2) ganz oder teilweise umhüllt, wonach weiter
die Schlauchummantelung (1) auf einer scheibenartigen Basis (5) mit zentraler Öffnung (6) ausgehend Schicht für Schicht aufgebaut wird und hierzu der Kabelstrang (3) durch die Öffnung (6) in der Basis (5) hindurchgeführt wird sowie dadurch die auf der Basis (5) aufgebaute Schichtenfolge als die Schlauchummantelung (1) den Kabelstrang (1) umhüllt, und wonach
die Schlauchummantelung (1) aus einem formlosen oder formneutralen Material mit einer unterhalb der Schmelztemperatur einer Kabelisolierung angesiedelten Verarbeitungstemperatur an die Kabel (2) angeformt und anschließend verfestigt wird.

2. Verfahren nach Anspruch 1, **dadurch gekennzeichnet, dass** die Schlauchummantelung (1) direkt und schichtweise auf den Kabelstrang (3) aufgebracht wird.

3. Verfahren nach Anspruch 1 oder 2, **dadurch gekennzeichnet, dass** die Schlauchummantelung (1) der Längserstreckung des Kabelstranges (3) folgend auf diesen aufgebracht wird.

4. Verfahren nach einem der Ansprüche 1 bis 3, **dadurch gekennzeichnet, dass** die Schlauchummantelung (1) winkelig zur Längserstreckung des Kabelstranges (3) um den Kabelstrang (3) herumgeführt wird.

5. Verfahren nach einem der Ansprüche 1 bis 4, **dadurch gekennzeichnet, dass** das Material physikalisch vernetzt wird.

6. Vorrichtung zur Herstellung einer Ummantelung (1) für elektrische Kabel (2), insbesondere zur Durchführung des Verfahrens nach einem der Ansprüche 1 bis 5, mit zumindest einem Manipulator (9) und einer an den Manipulator (9) angeschlossenen Düse (10) zur Ausgabe von formlosem, flüssigen Material im Zuge eines generativen Fertigungsverfahrens, wobei
der Manipulator (9) die Düse (10) zur Realisierung einer flexiblen Schlauchummantelung und Bündelung von Kabeln (2) in Automobilen zu einem Kabelstrang (3) beaufschlagt, wobei ferner
die Schlauchummantelung (1) auf einer scheibenartigen Basis mit zentraler Öffnung (6) ausgehend Schicht für Schicht aufgebaut wird und hierzu der Kabelstrang (3) durch eine Öffnung (6) in der Basis (5) hindurchgeführt wird sowie dadurch die auf der Basis (5) aufgebaute Schichtenfolge als die Schlauchummantelung (1) den Kabelstrang (3) zur Umhüllung der Kabel (2) mithilfe der Schlauchummantelung (1) umhüllt, und wobei
das formlose flüssige Material mithilfe einer Behandlungseinheit (11) ausgehärtet wird.

## Claims

1. Method for producing a sleeve (1) for electrical cables (2), according to which the sleeve (1) is produced wholly or partly by means of a generative manufacturing process by building a predetermined layer sequence, further according to which
the sleeve (1) completely or partially surrounds the cables (2) in the manner of a flexible tubular sleeve (1) for bundling cables (2) in automobiles to form a cable bundle (3), and further according to which the tubular sleeve (1) is built up layer by layer starting on a disc-like base (5) with central opening (6) and for this purpose the cable bundle (3) is passed through the opening (6) in the base (5), and the layer sequence built up on the base (5) consequently surrounds the cable bundle (1) as the tubular sleeve (1), and according to which
the tubular sleeve (1) is moulded against the cables (2) from a amorphous or form-neutral material with a processing temperature below the melting temperature of a cable insulation and subsequently solidified.

2. Method according to Claim 1, **characterized in that** the tubular sleeve (1) is applied directly and in layers to the cable bundle (3).

3. Method according to Claim 1 or 2, **characterized in that** the tubular sleeve (1) is applied to the cable bundle (3) following the longitudinal extension thereof.

4. Method according to any one of Claims 1 to 3, **characterized in that** the tubular sleeve (1) is guided around the cable bundle (3) at an angle to the longitudinal extension of the cable bundle (3).

5. Method according to any one of Claims 1 to 4, **characterized in that** the material is physically crosslinked.

6. Apparatus for producing a sleeve (1) for electrical cables (2), in particular for carrying out the method according to any one of Claims 1 to 5, with at least one manipulator (9) and a nozzle (10) connected to the manipulator (9) for dispensing an amorphous, fluid material in the course of a generative manufacturing process, wherein
the manipulator (9) acts on the nozzle (10) for the purpose of creating a flexible tubular sleeve and to bundle of cables (2) in automobiles to form a cable bundle (3), wherein further
the tubular sleeve (1) is built up layer by layer starting on a disc-like base with central opening (6) and for this purpose the cable bundle (3) is passed through the opening (6) in the base (5), and the layer sequence built up on the base (5) consequently surrounds the cable bundle (3) as the tubular sleeve (1) in order to enclose the cables (2) by means of the tubular sleeve (1), and wherein
the amorphous, fluid material is cured with the aid of a treatment unit (11).

## Revendications

1. Procédé de fabrication d'un gainage (1) pour câbles électriques (2), selon lequel le gainage (1) est produit entièrement ou en partie au moyen d'un procédé d'élaboration génératif par la configuration d'une succession de couches, selon lequel
le gainage (1) enveloppe en plus les câbles (2) entièrement ou en partie pour l'assemblage en faisceaux de câbles (2) dans l'industrie automobile en un faisceau de câbles (3) sous la forme d'un gainage à tube flexible (1), selon lequel
le gainage à tube flexible (1) est en outre configuré sur une base en forme de disque (5) avec une ouverture centrale (6) en partant du couche par couche et le faisceau de câbles (3) est traversé à cet effet par l'ouverture (6) dans la base (5) et la succession de couches constituée sur la base (5) ainsi que le gainage à tube flexible (1) enveloppent de cette manière le faisceau de câbles (1), et selon lequel
le gainage à tube flexible (1) est conformé et ensuite fixée aux câbles (2) à partir d'un matériau sans forme ou de forme neutre à une température de traitement établie en dessous de la température de fusion d'une isolation de câble.

2. Procédé selon la revendication 1, **caractérisé en ce que** le gainage à tube flexible (1) est appliqué directement et par couche au faisceau de câbles (3).

3. Procédé selon la revendication 1 ou 2, **caractérisé en ce que** le gainage à tube flexible (1) est appliqué au faisceau de câbles (2) en suivant l'extension longitudinale de celui-ci.

4. Procédé selon l'une quelconque des revendication précédentes 1 à 3, **caractérisé en ce que** le gainage à tube flexible (1) est passé autour du faisceau de câbles (3) de façon angulaire par rapport à l'extension longitudinale du faisceau de câbles (3).

5. Procédé selon l'une quelconque des revendications 1 à 4, **caractérisé en ce que** le matériau est physiquement réticulé.

6. Dispositif de fabrication d'un gainage (1) pour des câbles électriques (2), en particulier pour exécuter le procédé selon l'une quelconque des revendications 1 à 5 avec au moins un manipulateur (9) et une buse (10) raccordée au manipulateur (9) pour délivrer du matériau liquide sans forme au cours d'un procédé d'élaboration génératif, sachant que
le manipulateur (9) sollicité la buse (10) pour réaliser un gainage à tube flexible et l'assemblage en faisceaux de câbles (2) dans l'industrie automobile en un faisceau de câbles (3), sachant en outre que
le gainage à tube flexible (1) est configuré sur une base en forme de disque avec une ouverture centrale (6) en partant du couche par couche et le faisceau de câbles (3) est traversé à cet effet par une ouverture (6) dans la base (5) et la succession de couches constituée sur la base (5) ainsi que le gainage à tube flexible (1) enveloppent de ce fait le faisceau de câbles (3) pour envelopper les câbles (2) à l'aide du gainage à tube flexible (1), et sachant que
le matériau liquide sans forme est durci à l'aide d'une unité de traitement (11).
